# EUROPEAN PATENT APPLICATION

(11) **EP 2 372 513 A2**
(43) Date of publication of application: **05.10.2011**
(21) Application number: 10170077.1
(22) Date of filing: 20.07.2010
(51) Int. Cl.: G06F 3/048

(54) **Touch-sensitive electric apparatus and window operation method thereof**

(30) Priority: 26.03.2010 TW 99109274
(71) Applicant: Acer Incorporated, Taipei Hsien 221 (TW)
(72) Inventor: Lin, Chih-Hsiang, 221, Taipei Hsien (TW)
(74) Representative: Becker, Eberhard

(57) **Abstract**

Touch-sensitive electric devices and window operation methods thereof are provided. The window operation method is applicable to an electronic device including a touch-sensitive screen, a storage unit and a processing module. The window operating method includes the following steps of: storing a touch-control database including a touch-control event in the storage unit; analyzing a touch-control gesture received via the touch-sensitive screen by the processing module and determining whether the touch-control gesture corresponds to the touch-control event; if yes, generating a transparent window and a marked frame, and covering the transparent window on the touch-sensitive screen transparently and displaying the marked frame on the periphery of the window by the processing module; and operating the window correspondingly by the processing module according to a touch-control command received on a display area of the transparent window. Thus, the window operating method may enhance convenience for users during touch-control operations of the window.

## Description

### CROSS REFERENCE TO RELATED APPLICATIONS

This Application claims priority of Taiwan Patent Application No. 099109274, filed on March 26, 2010, the entirety of which is incorporated by reference herein.

### BACKGROUND OF THE INVENTION

### Field of the Invention

The disclosure relates generally to touch-sensitive electric apparatuses and window operation methods thereof, and, more particularly to touch-sensitive electric apparatuses and window operation methods thereof that utilize a finger or a simple gesture to operate a window of the electric apparatuses.

### Description of the Related Art

With the maturity of touch panel technologies, and the function of multi-point touch supported by Windows 7 of Microsoft, software for touch-sensitive interfaces have been developed and announced by several companies, in which the traditional keyboard and mouse input manner has been replaced by a touch-control manner; thus allowing the operational interface of computers to become more user friendly and appropriate for human behavior.

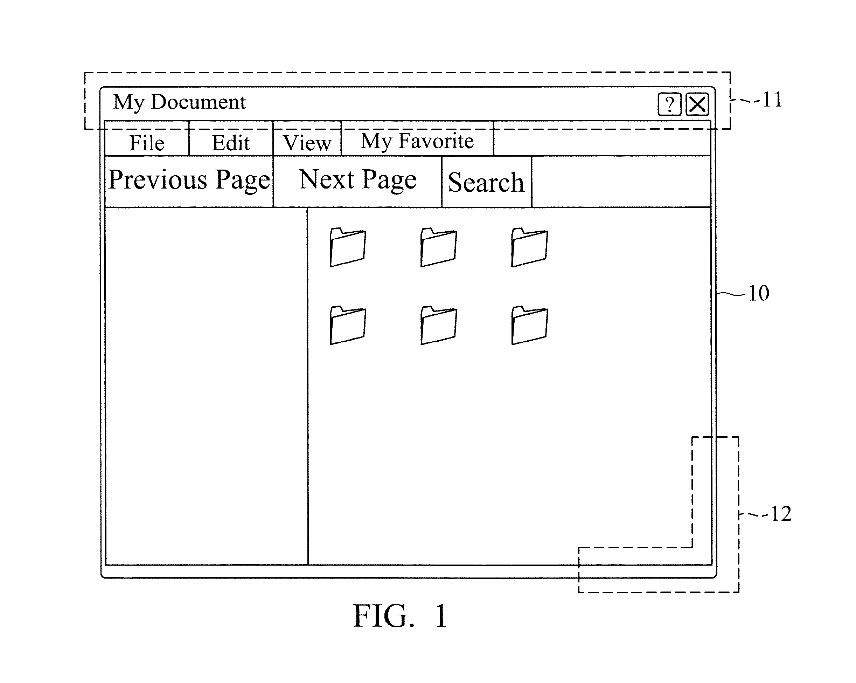

Please refer to Fig. 1, Fig. 1 is a schematic diagram illustrating a window provided by a general operating system. When a user wants to move the position of a window 10 or adjust the size of the window 10, the movement and adjustment of the window 10 can be respectively performed in a movement window area 12 and an adjustment window area 11 by utilizing the touch-control manner. However, since the size of both the adjustment window area 11 and the movement window area 12 are small, it is inconvenient to perform related operations within the areas by utilizing the touch-control manner. Therefore, due to the inconvenience for operating the window 10 via the touch panel, users always select the traditional keyboard and mouse input manner for input, reducing the advantages of the touch-control manner with interfaces which are more user friendly and appropriate for human behavior.

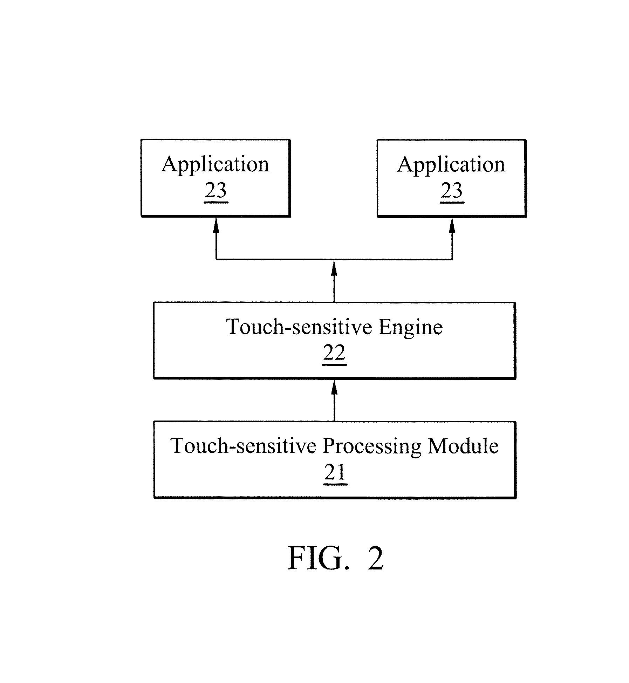

Please refer to Fig. 2, Fig. 2 shows the architecture of a conventional operating system having touch-control capabilities. When a user generates a touch-control operation on a touch-sensitive screen (not shown in Fig. 2), a touch-sensitive processing module 21 will generate touch-control information according to the touch-control operation, and transmit the touch-control information to a touch-sensitive engine 22 of the operating system. The touch-sensitive engine 22 determines whether the touch-control operation conforms to a touch-control gesture. When the touch-control operation conforms to the touch-control gesture, the touch-sensitive engine 22 further locates an application 23 which needs to receive the touch-control gesture, and locates an application 23 which obtains a window focus. If the application 23 which obtained the window focus has registered to receive the touch-control gesture in the operating system, the touch-sensitive engine 22 will transmit the touch-control information to the application 23. However, if the registered application 23 does not obtain the window focus, the application 23 will not receive the touch-control information. Therefore, in the working environment of a general operating system, the touch-sensitive engine 22 does not allow the application 23 to receive a global gesture. That is, the application 23 cannot receive any touch-control data occurring in an area outside of a content display area for the application 23. Further, the application 23 cannot receive the touch-control gesture when it runs in a background

### BRIEF SUMMARY OF THE INVENTION

Touch-sensitive electric devices and window operation methods thereof are provided to overcome the mentioned problems.

In an embodiment of a window operation method for use in an electronic device comprising a touch-sensitive screen, a storage unit and a processing module, a touch-control database comprising a touch-control event is stored in the storage unit. A window is displayed in the touch-sensitive screen. A touch-control gesture received via the touch-sensitive screen is analyzed by the processing module, and it is determined whether the touch-control gesture conforms to the touch-control event. When the touch-control gesture conforms to the touch-control event, a transparent window and a marked frame are generated in the touch-sensitive screen by the processing module, wherein the transparent window is covered on the touch-sensitive screen transparently, and the marked frame is displayed on the periphery of the window. Then, the window is correspondingly operated by the processing module according to a touch-control command received on a display area of the transparent window in the touch-sensitive screen.

In some embodiments, the touch-control command is used to adjust the display area of the window, adjust the position of the window in the touch-sensitive screen, or close the window.

In some embodiments, when several windows are provided, wherein the windows are overlapped to display, the processing module can select the top window, and display the marked frame on the periphery of the top window.

An embodiment of a touch-sensitive electronic device comprises a touch-sensitive screen, a storage unit and a processing module. The storage device comprises a touch-control database comprising a touch-control event. The touch-sensitive screen can receive a touch-control gesture, and display a window. The processing module electrically couples to the storage unit and the touch-sensitive screen, and analyzes the touch-control gesture to determine whether the touch-control gesture conforms to the touch-control event. When the touch-control gesture conforms to the touch-control event, the processing module generates a transparent window and a marked frame in the touch-sensitive screen, and covers the transparent window on the touch-sensitive screen transparently, and displays the marked frame on the periphery of the window.

In some embodiments, the processing module further operates the window according to a touch-control command received on a display area of the transparent window in the touch-sensitive screen.

In some embodiments, the processing module adjusts the display area of the window, adjust the position of the window in the touch-sensitive screen, or close the window according to the touch-control command.

In some embodiments, when several windows are provided, wherein the windows are overlapped to display, the processing module further selects the top window, and displays the marked frame on the periphery of the top window.

In some embodiments, when the touch-control gesture does not conform to the touch-control event, the processing module generates multi-point touch-control information according to the touch-control gesture, and transmits the multi-point touch-control information to an operating system executed on the electronic device.

Therefore, the touch-sensitive electric devices and window operation methods thereof of the present disclosure can easily control a window by inputting touch-control gestures via a window, to enhance convenience for users during touch-control operations of the window.

Window operation methods of a touch-sensitive electric device may take the form of a program code embodied in a tangible media. When the program code is loaded into and executed by a machine, the machine becomes an apparatus for practicing the disclosed method.

### BRIEF DESCRIPTION OF THE DRAWINGS

The invention will become more fully understood by referring to the following detailed description with reference to the accompanying drawings, wherein:

Fig. 1 is a schematic diagram illustrating a window provided by a general operating system;

Fig. 2 shows the architecture of a conventional operating system having touch-control capabilities;

Fig. 3A is a block diagram illustrating a first embodiment of a touch-sensitive electronic device of the invention;

Fig. 3B is an architecture diagram illustrating the processing of a touch-control gesture by the touch-sensitive electronic device in Fig. 3A;

Fig. 4 is a schematic diagram illustrating a touch-sensitive screen of the touch-sensitive electronic device in the first embodiment of the invention;

Fig. 5A is a schematic diagram illustrating a touch-sensitive screen applied with a horizontal touch-control gesture of the touch-sensitive electronic device in the first embodiment of the invention;

Fig. 5B is a schematic diagram illustrating a touch-sensitive screen applied with an upward touch-control gesture of the touch-sensitive electronic device in the first embodiment of the invention;

Fig. 5C is a schematic diagram illustrating a touch-sensitive screen applied with a downward touch-control gesture of the touch-sensitive electronic device in the first embodiment of the invention;

Fig. 5D is a schematic diagram illustrating a touch-sensitive screen applied with a cross touch-control gesture of the touch-sensitive electronic device in the first embodiment of the invention;

Fig. 6 A is a schematic diagram illustrating a touch-sensitive screen of the touch-sensitive electronic device in a second embodiment of the invention;

Fig. 6B is a schematic diagram illustrating a touch-sensitive screen with a single point touch of the touch-sensitive electronic device in the second embodiment of the invention;

Fig. 6C is a schematic diagram illustrating a transformation window of the touch-sensitive electronic device in the second embodiment of the invention; and

Fig. 7 is a flowchart of an embodiment of a window operation method of the invention.

### DETAILED DESCRIPTION OF THE INVENTION

Touch-sensitive electric devices and window operation methods thereof are provided.

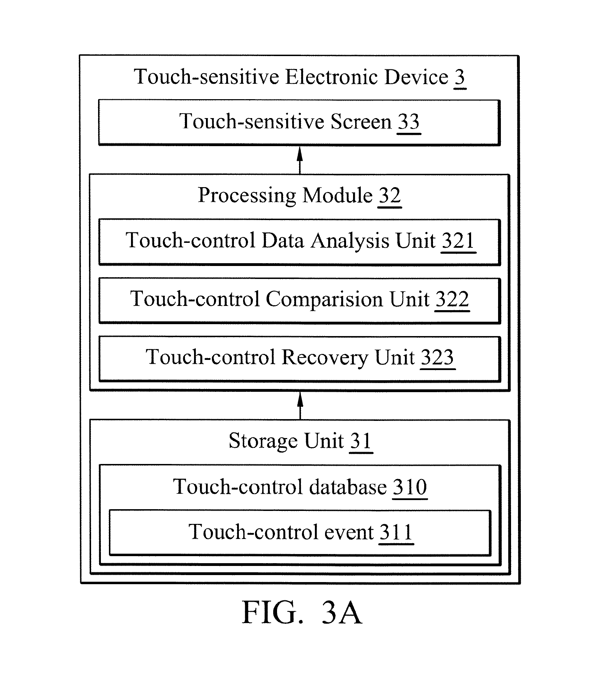

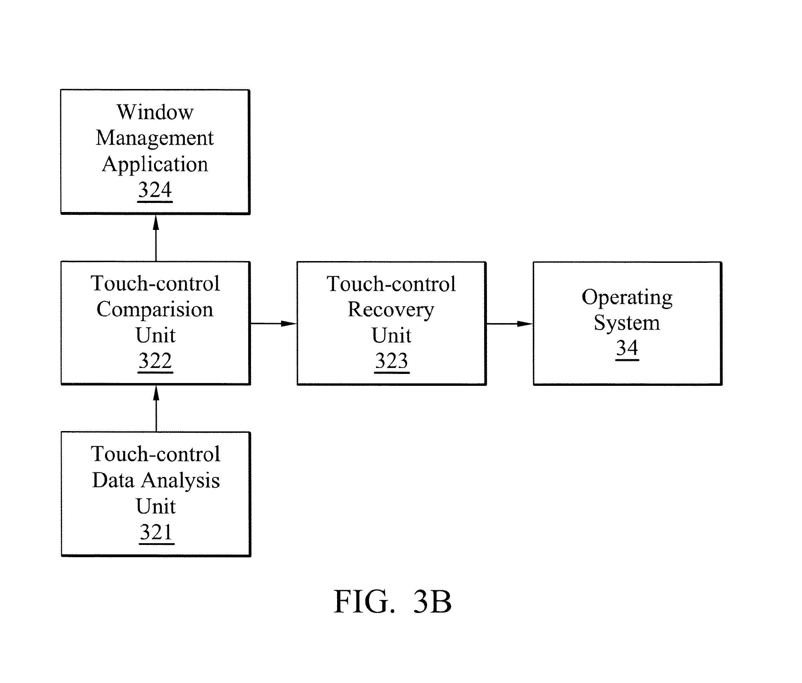

Please refer to Figs. 3A and 3B, wherein Fig. 3A is a block diagram illustrating a first embodiment of a touch-sensitive electronic device of the invention, and Fig. 3B is an architecture diagram illustrating the processing of a touch-control gesture by the touch-sensitive electronic device in Fig. 3A. In Fig. 3A, the touch-sensitive electronic device 2 comprises a storage unit 31, a processing module 32, and a touch-sensitive screen 33. The processing module 32 is electrically coupled to the storage unit 32 and the touch-sensitive screen 33.

The storage unit 31 may be a hard disk, a Solid State Hard Disk, an optical disc, or other suitable storage media, for storing a touch-control database 310. The touch-control database 310 comprises at least one preset touch-control event 311.

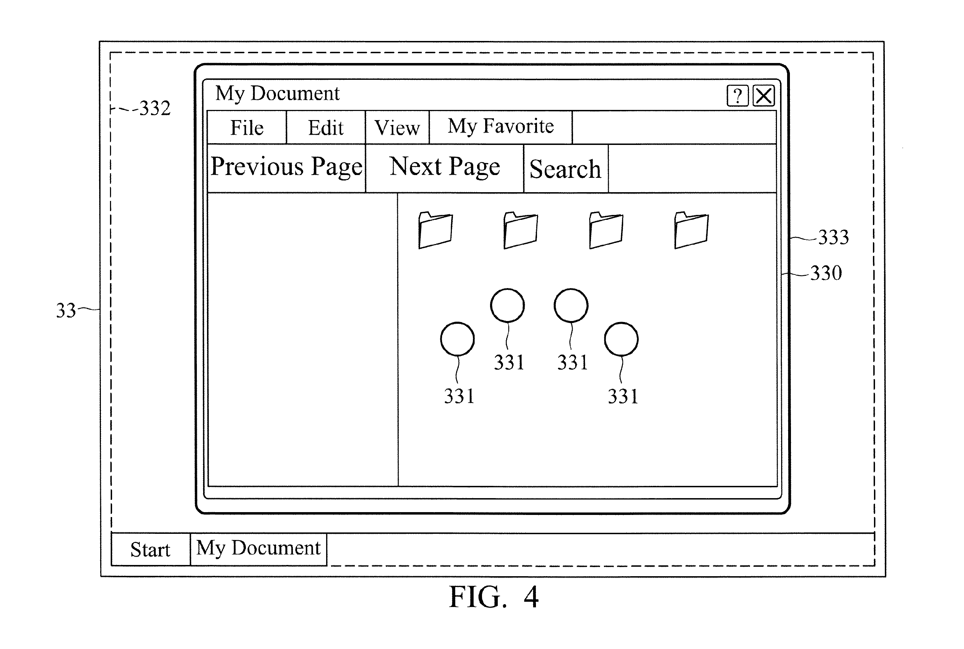

The touch-sensitive screen 33 can display windows and receive touch-control gestures. When a user wants to activate an application, the processing module 32 will display at least one window 330 corresponding to the application in the touch-sensitive screen 33. When the user performs a touch-control gesture on the touch-sensitive screen 33, as shown in Fig. 4, a touch-control data analysis unit 321 of the processing module 32 will analyzes the raw data generated according to the touch-control gesture to calculate data, such as coordinates of contact points corresponding to the touch-control gesture. A touch-control comparison unit 322 of the processing module 32 will compare the calculated data and the touch-control event 311, to determine whether the touch-control gesture input by the user conforms to the touch-control event 311. When the touch-control gesture conforms to the touch-control event 311, the processing module 32 will execute a window management application 324, which is executed in background. When the touch-control gesture does not conform to the touch-control event 311, a touch-control recovery unit 323 will generate multi-point touch-control information according to the touch-control gesture, and transmit the multi-point touch-control information to an operating system 34 executed in the touch-sensitive electronic device 3 of the present invention. In some embodiments, the multi-point touch-control information may be a HID (Human Interface Device) report, such that the operating system 34 can handle the touch-control gesture according to the HID report. In some embodiments, the touch-control gesture may be generated when a user simultaneously uses four fingers to touch four contact points 331 of the touch-sensitive screen 33, as shown in Fig. 4. It is understood that, the touch-control gesture in Fig. 4 is only an example of the invention, and is not limited thereto.

When the touch-control gesture conforms to the touch-control event 311, the window management application 324 can obtain a window handle of a window 330, which is currently displayed in the touch-sensitive screen 33 via the window API (Application Interface) of the operating system 34, and lock the picture of the touch-sensitive screen 33. The processing module 23 can generate a transparent window 332 and a marked frame 333 in the touch-sensitive screen 33, and cover the transparent window 332 on the touch-sensitive screen 33 transparently, and display the marked frame 333 on the periphery of the window 330. It is noted that, "transparently covering" means the background of the transparent window 332 is transparent, and the transparent window 332 is displayed above the touch-sensitive screen 33 to obtain the display effect as shown in Fig. 4. In some embodiments, the coverage of the transparent window 332 may be the whole desktop of the touch-sensitive screen 33. In some embodiments, the transparent window 332 is generated by setting a transparent attribute of the transparent window 332 as semi-transparency via the window API of the operating system; thereby, achieving the display effect in Fig. 4.

Concurrently, the user can input a touch-control command within the display area of the transparent window 332 by using a gesture or click, such that the processing module 32 can operate the window 330 according to the touch-control command. In some embodiments, the touch-control command is used to adjust the display area of the window 330, adjust the position of the window 330 in the touch-sensitive screen 33, or close the window 330.

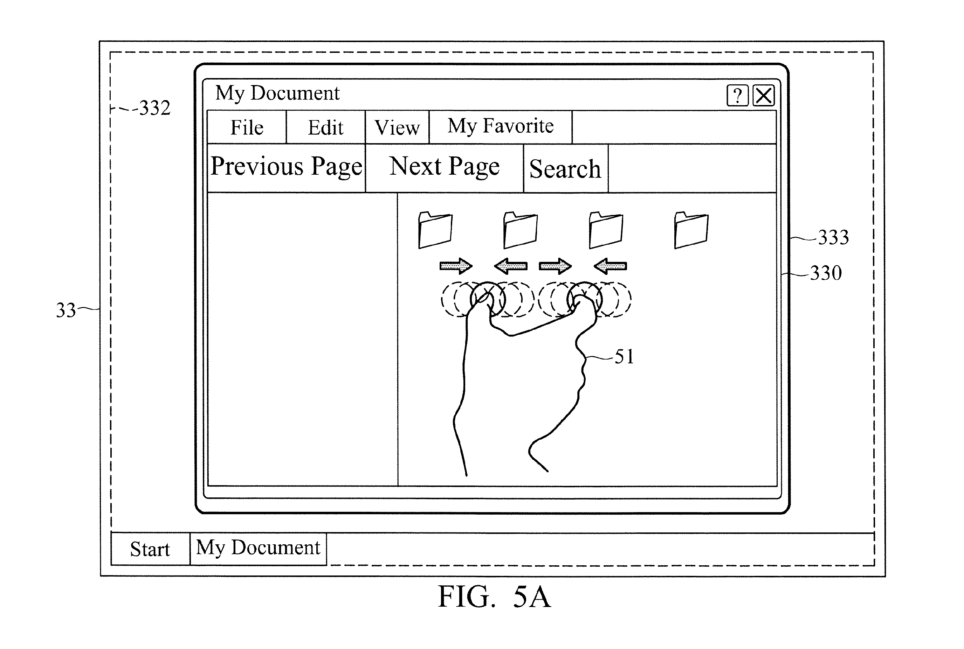

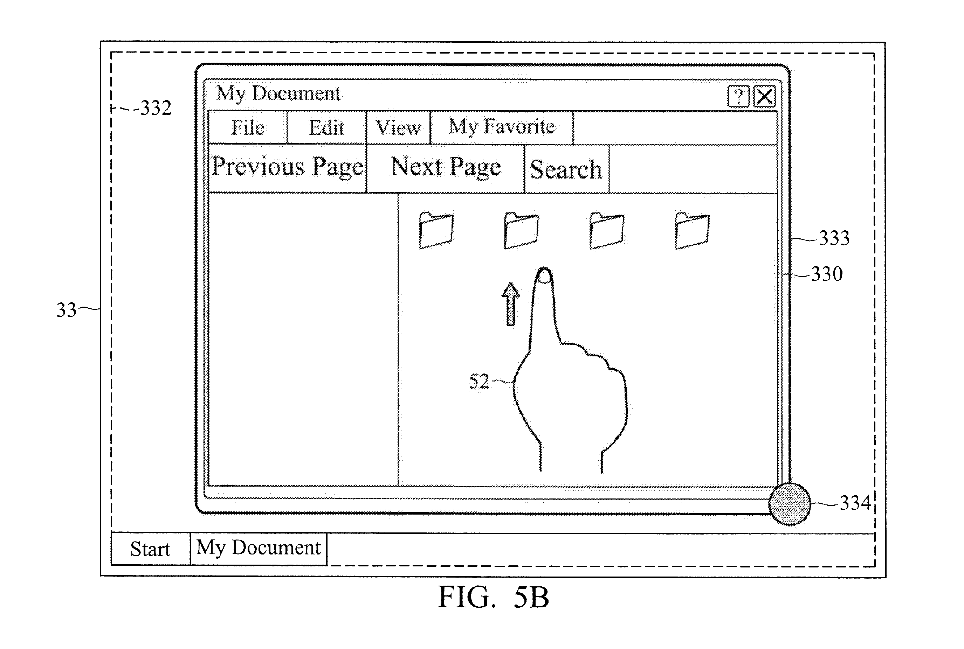

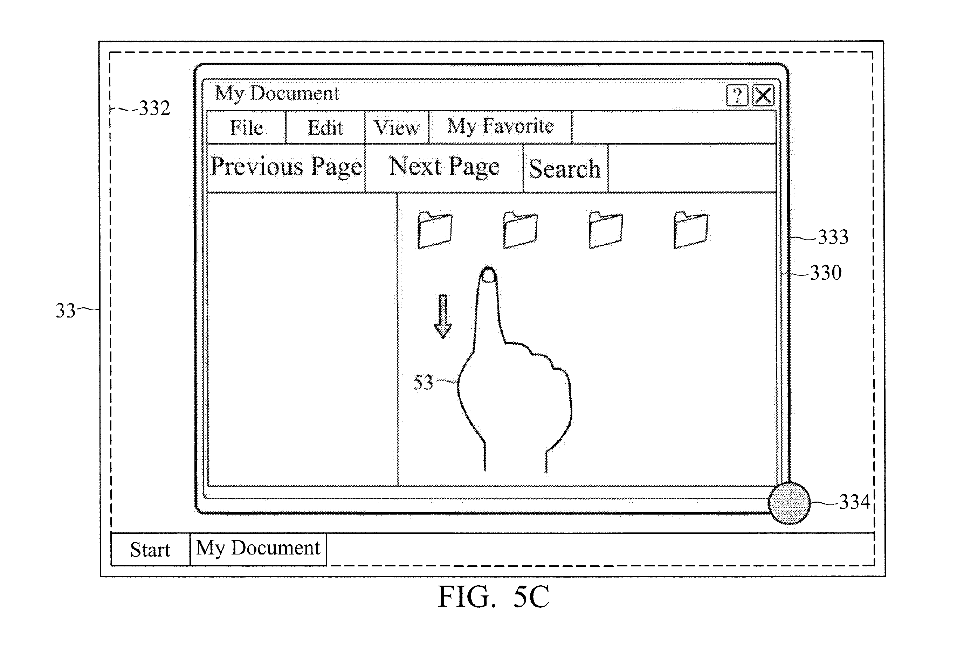

For example, when the touch-control command is used to adjust the display area of the window 330, a user can use two fingers to input a horizontal touch-control gesture 51 by horizontally closing or separating the fingers from each other on the touch-sensitive screen 33, as shown in Fig. 5A. The processing module 32 can calculate a scale ratio according to the closed or opened distance of the two fingers, adjust the size of the window 330 by using an application, such as ShowWindow/SetWindowPos in the window API, and maintain the aspect ratio of the window 330. When the user inputs an upward touch-control gesture 52, as shown in Fig. 5B, the processing module 32 can maximize the size of the window 330 according to the upward touch-control gesture 52. When the user inputs a downward touch-control gesture 53, as shown in Fig. 5C, the processing module 32 can minimize the size of the window 330 according to the downward touch-control gesture 53. Further, the processing module 3 can also display a touch-control adjustment point 334 at a corner of the window 330, and adjust the size of the window 330 according to an offset of the touch-control adjustment point 334 which is dragged by the user.

When the touch-control command is used to adjust the position of the window 330, a user can use a finger to press on the window 330, and drag the window 330 to an appropriate position. Additionally, when the user performs a flick along a specific direction on the touch-sensitive screen 33, the processing module 32 can calculate an initial speed according to a movement vector of the contact points corresponding to the flick, and perform a movement for the window 330 in the specific direction according to the initial speed and a predefined damping coefficient. It is noted that, the movement of the window 330 may have an inertia effect of drifting.

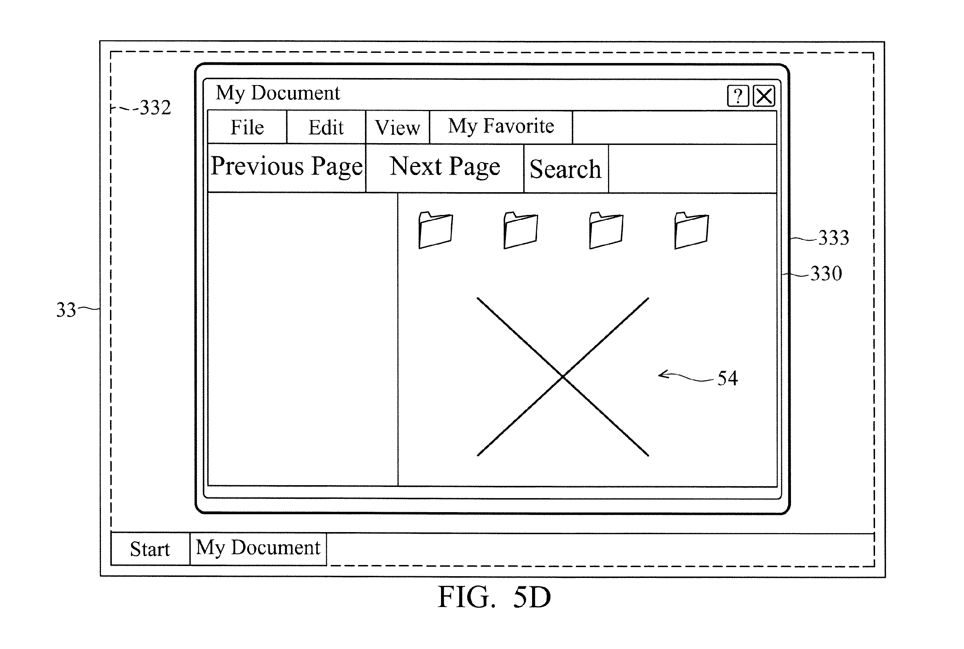

When a user inputs a cross touch-control gesture 54 on the touch-sensitive screen 33, as shown in Fig. 5D, the processing module 32 can close the window 330.

It is noted that, after the touch-sensitive electronic device 3 receives the touch-control gesture, the processing module 2 can first determine whether the touch-control gesture is the touch-control event 311, and accordingly determine whether to transmit the touch-control gesture to the operating system 34.

Further, when the user wants to leave the touch-control operation (control of the window 330 via the touch-control gesture), the user can also input the touch-control gesture as in Fig. 4, and the processing module 32 can stop displaying the transparent window 332 and the marked frame 333. It is understood that, the user can still use the default touch-control function provided by the operating system 34. Additionally, if the touch-control function for windows of the touch-sensitive electronic device 3 of the present invention malfunctions, due to some unexpected reasons, the processing module 32 will directly transmit the touch-control information corresponding to the touch-control gesture to the operating system 34, such that the touch-control function for windows of the touch-sensitive electronic device 3 can be suspended. Therefore, mistakes of determinations due to malfunction of the touch-control function for windows can be avoided.

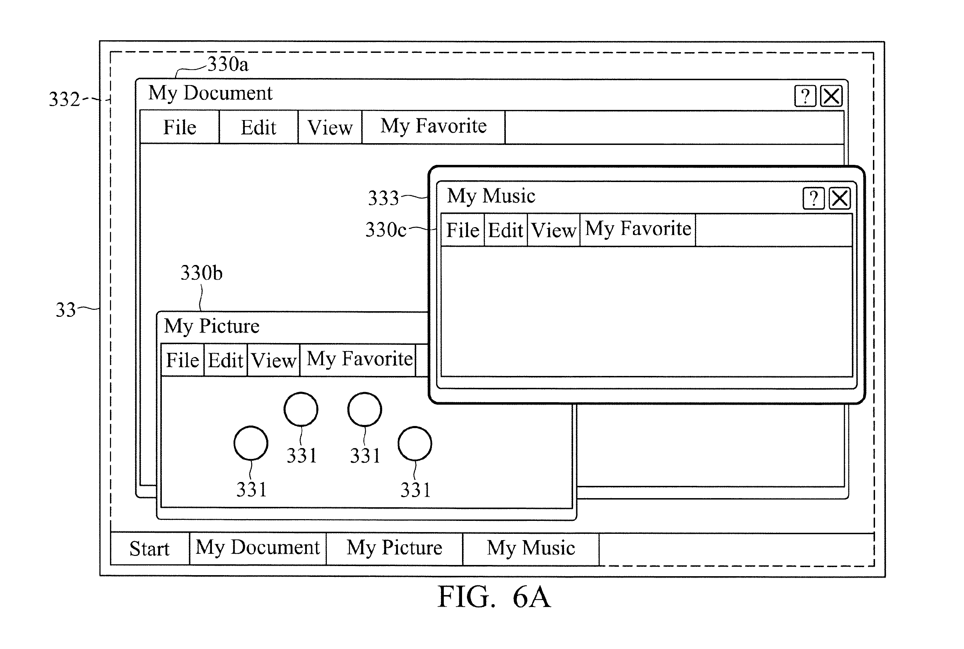

Please refer to Fig. 6A, Fig. 6A is a schematic diagram illustrating a touch-sensitive screen of the touch-sensitive electronic device in a second embodiment of the invention. In contrast to the first embodiment, the touch-sensitive screen 33 of the second embodiment further comprises windows 330a, 330b and 330c, wherein the windows are overlapped for displaying. Other components of the two embodiments are similar, and related discussions are omitted here. When a user inputs a touch-control gesture, the processing module 32 will display the marked frame 333 on the periphery of the top window having the highest Z-order, such as the window 330c. It is noted that, Z-order is an ordering of overlapping two-dimensional objects, such as windows in a graphical user interface (GUI). When two windows overlap, their Z-order determines which one appears on top of the other. Consequently, the window which the user wants to operate can be marked.

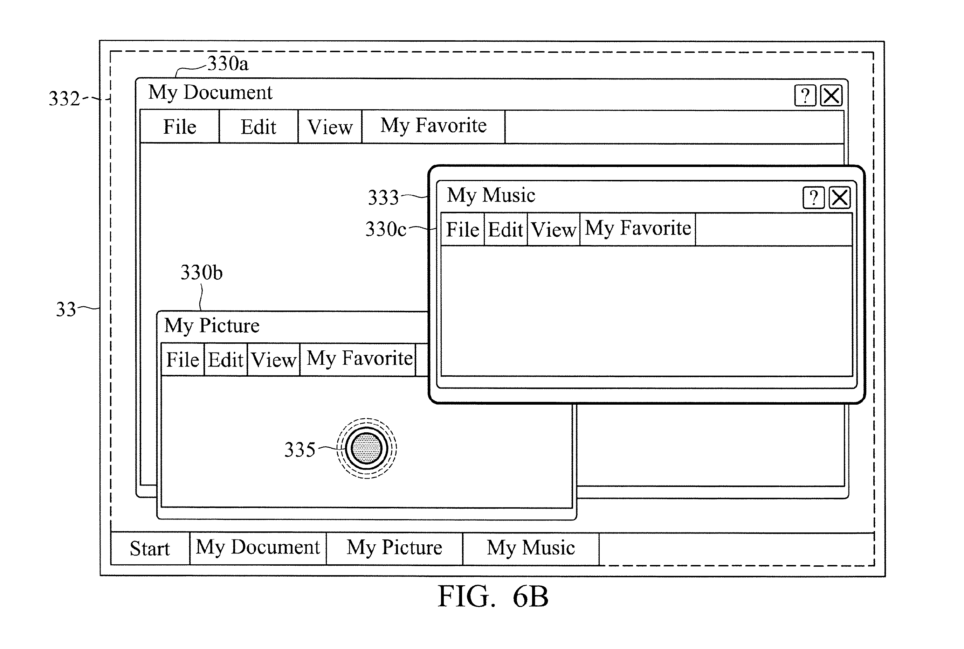

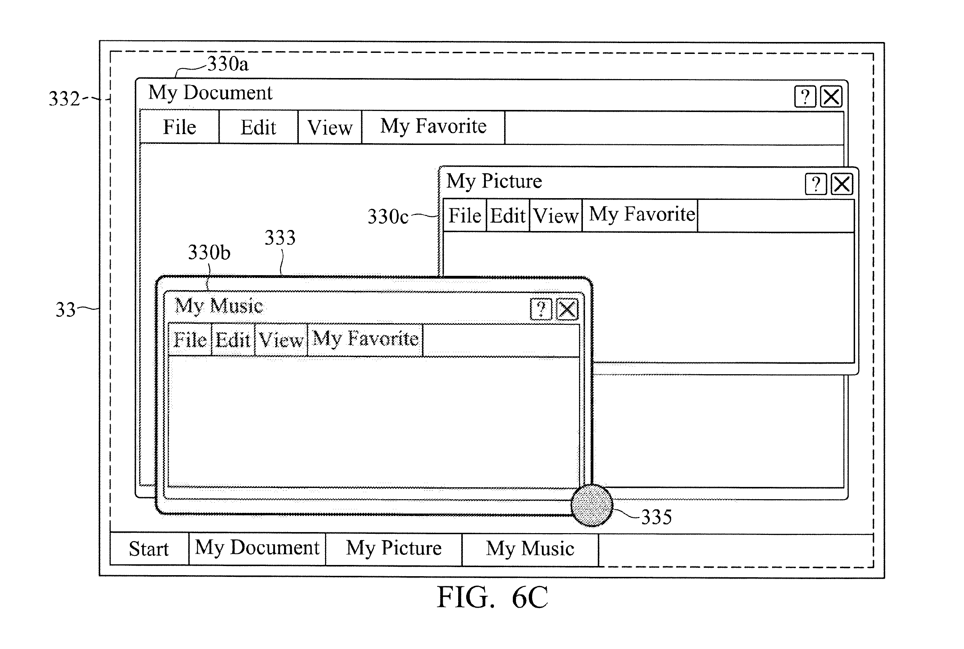

Additionally, when the user wants to operate other windows, the user can click another window, as shown in Fig. 6B. The processing module 32 can determine the coordinates of the contact point 335 using a windows management tool application, cause the corresponding window 330b obtains a focus according to the coordinates, and display the marked frame 333 on the periphery of the window 330b, as shown in Fig. 6C. In this way, the switching among windows can be efficiently accomplished, and the user can perform related touch-controls for the switched window.

Even though the above embodiments have clearly discussed the window operation method of the present invention, a flowchart is also discussed below for better understanding.

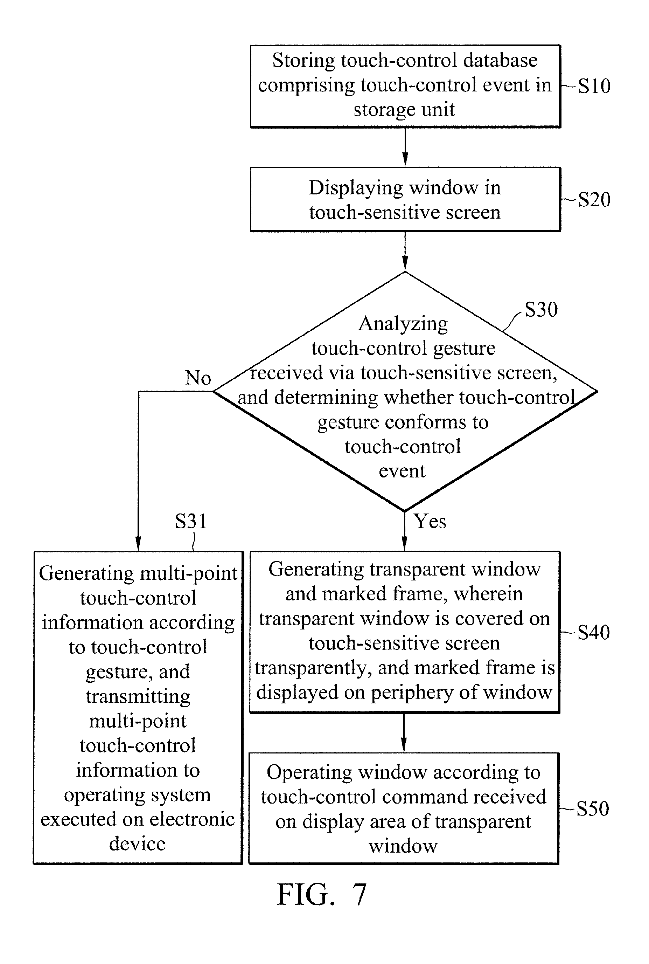

Please refer to Fig. 7, Fig. 7 is a flowchart of an embodiment of a window operation method of the invention. The window operation method can be used in an electronic device having a touch-sensitive screen, such as the touch-sensitive electronic device 3 of the above embodiments (as shown in Fig. 3A), but it is not limited thereto.

In step S10, a touch-control database is stored in the storage unit, wherein the touch-control database comprises a touch-control event.

In step S20, a window is displayed in the touch-sensitive screen.

In step S30, a touch-control gesture received via the touch-sensitive screen is analyzed, and it is determined whether the touch-control gesture conforms to the touch-control event. When the touch-control gesture conforms to the touch-control event, the procedure goes to step S40. When the touch-control gesture does not conform to the touch-control event, the procedure goes to step S31.

In step S40, a transparent window and a marked frame are generated, wherein the transparent window is covered on the touch-sensitive screen transparently, and the marked frame is displayed on the periphery of the window. When several windows are displayed in the touch-sensitive screen, the marked frame is displayed on the periphery of the top window having the highest Z-order.

In step S50, the window is correspondingly operated according to a touch-control command received on a display area of the transparent window.

In step S31, multi-point touch-control information is generated according to the touch-control gesture, and the multi-point touch-control information is transmitted to the operating system executed on the electronic device.

Window operation methods for a touch-sensitive electronic device, or certain aspects or portions thereof, may take the form of a program code (i.e., executable instructions) embodied in tangible media, such as floppy diskettes, CD-ROMS, hard drives, or any other machine-readable storage medium, wherein, when the program code is loaded into and executed by a machine, such as a computer, the machine thereby becomes an apparatus for practicing the methods. The methods may also be embodied in the form of a program code transmitted over some transmission medium, such as electrical wiring or cabling, through fiber optics, or via any other form of transmission, wherein, when the program code is received and loaded into and executed by a machine, such as a computer, the machine becomes an apparatus for practicing the disclosed methods. When implemented on a general-purpose processor, the program code combines with the processor to provide a unique apparatus that operates analogously to application specific logic circuits.

While the invention has been described by way of example and in terms of preferred embodiment, it is to be understood that the invention is not limited thereto. Those who are skilled in this technology can still make various alterations and modifications without departing from the scope and spirit of this invention. Therefore, the scope of the present invention shall be defined and protected by the following claims and their equivalents.

## Claims

1. A window operation method, for use in an electronic device comprising a touch-sensitive screen, a storage unit and a processing module, comprising:
storing a touch-control database comprising at least one touch-control event in
the storage unit;
displaying a window in the touch-sensitive screen;
analyzing a touch-control gesture received via the touch-sensitive screen by
the processing module, and determining whether the touch-control gesture conforms to the at least one touch-control event;
when the touch-control gesture conforms to the at least one touch-control
event, generating a transparent window and a marked frame in the touch-sensitive screen by the processing module, wherein the transparent window is displayed on the touch-sensitive screen in a transparently covering manner, and the marked frame is displayed on the periphery of the window; and
operating the window by the processing module according to a touch-control
command received on a display area of the transparent window in the touch-sensitive screen.

2. The method of claim 1, wherein the touch-control command is used to adjust the display area of the window, adjust the position of the window in the touch-sensitive screen, or close the window.

3. The method of claim 1, wherein when several windows are provided, and the at least one touch-control gesture conforms to the touch-control event, the method further comprises:
selecting the top window having the highest Z-order by the processing
module; and
displaying the marked frame on the periphery of the top window by the
processing module.

4. The method of claim 3, further comprising:
selecting one of the windows except for the top window on the touch-sensitive
screen by a user;
causing the selected window to obtain a focus; and
displaying the marked frame on the periphery of the selected window.

5. The method of claim 1, wherein when the touch-control gesture does not conform to the at least one touch-control event, the method further comprises:
generating multi-point touch-control information according to the touch-control gesture; and
transmitting the multi-point touch-control information to an operating system
executed on the electronic device.

6. A touch-sensitive electronic device, comprising:
a storage unit storing a touch-control database comprising at least one touch-control event;
a touch-sensitive screen receiving a touch-control gesture, and displaying a
window; and
a processing module electrically coupled to the storage unit and the touch-sensitive screen, analyzing the touch-control gesture to determine whether the touch-control gesture conforms to the at least one touch-control event, and when the touch-control gesture conforms to the at least one touch-control event, generating a transparent window and a marked frame in the touch-sensitive screen, wherein the transparent window is displayed on the touch-sensitive screen in a transparently covering manner, and the marked frame is displayed on the periphery of the window, and operating the window according to a touch-control command received on a display area of the transparent window in the touch-sensitive screen.

7. The touch-sensitive electronic device of claim 6, wherein the processing module adjusts the display area of the window, adjusts the position of the window in the touch-sensitive screen, or closes the window according to the touch-control command.

8. The touch-sensitive electronic device of claim 6, wherein when several windows are provided, the processing module selects the top window having the highest Z-order, and displays the marked frame on the periphery of the top window.

9. The touch-sensitive electronic device of claim 8, wherein when one of the windows except for the top window is selected on the touch-sensitive screen by a user, the processing module causes the selected window to obtain a focus, and displays the marked frame on the periphery of the selected window.

10. The touch-sensitive electronic device of claim 6, wherein when the touch-control gesture does not conform to the at least one touch-control event, the processing module further generates multi-point touch-control information according to the touch-control gesture, and transmits the multi-point touch-control information to an operating system executed on the touch-sensitive electronic device.

11. Computer program product, comprising program code which, when loaded into and executed by a machine, causes the method of anyone of claims 1 to 5 to be performed.

12. Computer program according to claim 11, stored on a machine-readably medium.
